# FASCICULE DE BREVET EUROPEEN

(11) **EP 0 839 443 B1**
(45) Date de publication et mention de la délivrance du brevet: **16.01.2002**
(21) Numéro de dépôt: 97440097.0
(22) Date de dépôt: 14.10.1997
(51) Int. Cl.: A01D 34/66

(54) **Machine de coupe**
Mähmaschine
Cutting machine

(30) Priorité: 31.10.1996 FR 9613489
(43) Date de publication de la demande: 06.05.1998
(73) Titulaire: KUHN S.A., 67700 Saverne (FR)
(72) Inventeur: Neuerburg, Horst, 67700 Saverne (FR); Lacroix, Jean-Paul, 67670 Mommenheim (FR)

(56) Documents cités:
- EP-A- 0 556 143
- EP-A- 0 734 645
- DE-A- 1 757 434
- DE-A- 4 110 430
- DE-U- 9 112 331
- FR-A- 2 675 980
- GB-A- 1 119 644
- GB-A- 2 157 936
- NL-A- 6 918 351
- NL-A- 9 202 216

## Description

La présente invention se rapporte à une machine de coupe comportant :
- un mécanisme de coupe s'étendant :
   - en position de travail, transversalement à la direction d'avance et au niveau du sol ;
   - en position andain, transversalement à ladite direction d'avance et à une certaine distance au-dessus du sol ; et
   - en position de transport, sensiblement verticalement vers le haut.
- une structure d'attelage destinée à être liée au dispositif d'attelage d'un véhicule moteur ;
- une poutre porteuse liée d'une part à la structure d'attelage au moyen d'une première articulation et d'autre part au mécanisme de coupe au moyen d'une deuxième articulation ;
- un dispositif de manoeuvre permettant d'amener le mécanisme de coupe dans les différentes positions et comportant :
   - un organe de manoeuvre comprenant un verrou destiné à stopper, lors de la mise en position andain, le pivotement du mécanisme de coupe, vers le haut, autour de l'axe longitudinal de la deuxième articulation ; et
   - un vérin de manoeuvre lié à l'une de ses extrémités audit organe de manoeuvre et à l'autre de ses extrémités à la structure d'attelage au moyen de deux articulations correspondantes.

Une telle machine de coupe est connue par le document FR 96 05051, correspondant à la demande de brevet FR-A-2 747 534, mise à disposition du public le 24.10.97.

Cette machine de coupe comporte dans les grandes lignes un mécanisme de coupe, une structure d'attelage, une poutre porteuse et un dispositif de manoeuvre.

La poutre porteuse est liée d'une part à la structure d'attelage au moyen d'une première articulation et d'autre part au mécanisme de coupe au moyen d'une deuxième articulation.

Le dispositif de manoeuvre comporte un organe de manoeuvre comprenant un premier levier lié au mécanisme de coupe, un deuxième levier lié à la poutre porteuse et audit premier levier, et un verrou destiné à stopper, lors de la mise en position andain du mécanisme de coupe, le pivotement de ce dernier vers le haut.

Le verrou est composé d'un troisième levier lié d'une part au deuxième levier et venant d'autre part en butée contre la poutre porteuse lors de la mise en position andain du mécanisme de coupe.

Le dispositif de manoeuvre comporte en sus un vérin de manoeuvre permettant notamment d'amener le mécanisme de coupe dans la position andain. Ce vérin de manoeuvre est lié à la structure d'attelage et au deuxième levier.

L'ensemble vérin de manoeuvre, structure d'attelage, poutre porteuse et deuxième levier forme un quadrilatère déformable.

Lorsque l'opérateur souhaite mettre la faucheuse de la position de travail dans la position andain, il commande, à partir du véhicule moteur, le vérin de manoeuvre, lequel se raccourcit et fait pivoter le mécanisme de coupe vers le haut autour de la deuxième articulation jusqu'à ce que le verrou vienne en appui sur une butée prévue sur la poutre porteuse. Dès cet instant, le mécanisme de coupe et la poutre porteuse pivotent autour de la première articulation liant ladite poutre porteuse à la structure d'attelage, jusqu'à ce qu'un limiteur, implanté entre la structure d'attelage et la poutre porteuse, limite ce deuxième pivotement.

L'énergie développée par le vérin de manoeuvre est fonction de la puissance du véhicule moteur au moyen duquel il est commandé. En position andain, toute l'énergie développée par le vérin de manoeuvre est reportée sur la structure d'attelage, l'organe de manoeuvre et la poutre porteuse, ce qui se traduit par une structure d'attelage, un organe de manoeuvre et une poutre porteuse, ainsi que les différentes articulations concernées, qui sont particulièrement sollicités.

Le but de la présente invention est de perfectionner la machine de coupe de l'art antérieur, tout en cherchant à obtenir une machine de coupe simple et facile à mettre en oeuvre.

A cet effet, la machine de coupe selon l'invention est caractérisée en ce que le dispositif de manoeuvre comporte en sus une butée escamotable qui limite le pivotement de la poutre porteuse autour de l'axe longitudinal de la première articulation lorsque le mécanisme de coupe s'étend en position andain, et qui est escamotée pour permettre la mise en position de transport du mécanisme de coupe, la mise en place de ladite butée escamotable et son escamotage se faisant automatiquement au moyen d'un mécanisme de commande, lorsque ledit mécanisme de coupe est amené de la position de travail ou de la position andain dans la position de transport.

Une telle machine de coupe permet notamment de mettre le mécanisme de coupe en position andain sans soumettre la structure d'attelage, l'organe de manoeuvre, la poutre porteuse et les différentes articulations concernées à des contraintes supérieures à celles nécessaires pour maintenir ledit mécanisme de coupe en position andain. En outre, la mise en position andain, ou la mise en position de transport ou de travail ne demande aucune manoeuvre supplémentaire de la part de l'opérateur puisque la butée escamotable s'escamote et se met en place automatiquement lors de la manoeuvre du mécanisme de coupe.

Dans une construction préférée l'invention peut concerner les caractéristiques suivantes considérées isolément ou dans toutes leurs combinaisons techniquement possibles :
- la butée escamotable limite la course du vérin de manoeuvre lorsque le mécanisme de coupe s'étend en position andain, ce qui permet avantageusement de reporter le surplus d'énergie développée par ledit vérin de manoeuvre par rapport à celle nécessaire pour maintenir le mécanisme de coupe en position andain sur la butée escamotable ;
- la butée escamotable est liée au vérin de manoeuvre au moyen d'une articulation au moins sensiblement parallèle aux articulations liant le vérin de manoeuvre à l'organe de manoeuvre et à la structure d'attelage, ce qui permet de pivoter ladite butée escamotable dans une position inactive ;
- la butée escamotable est liée à la tige du vérin de manoeuvre au moyen de l'articulation au moins sensiblement parallèle aux articulations liant le vérin de manoeuvre à l'organe de manoeuvre et à la structure d'attelage ;
- la butée escamotable est destinée à venir buter sur le corps du vérin de manoeuvre en position andain ;
- en position andain, lorsque la butée escamotable est en butée sur le corps du vérin de manoeuvre, la ligne d'action de la butée escamotable est au moins sensiblement confondue avec l'axe longitudinal dudit vérin de manoeuvre ce qui permet audit vérin de manoeuvre de travailler dans de bonnes conditions sans qu'il soit soumis à d'importantes contraintes de flexion ;
- en position de travail et en position andain, la butée escamotable repose sur la tige du vérin de manoeuvre par l'intermédiaire d'un organe de protection destiné à protéger ladite tige ;
- l'organe de protection est en matière plastique souple et est fixé sur la butée escamotable ;
- le mécanisme de commande qui assure la mise en place et l'escamotage de la butée escamotable comporte une came qui agit sur ladite butée escamotable lorsque le mécanisme de coupe est amené de la position de travail ou de la position andain dans la position de transport ;
- la came agit sur la butée escamotable de manière à la faire pivoter autour de l'articulation liant ladite butée escamotable au vérin de manoeuvre ;
- la came fait partie d'un levier appartenant à l'organe de manoeuvre, ledit levier étant articulé à l'une de ses extrémités à l'extrémité du vérin de manoeuvre et à l'autre extrémité à la poutre porteuse ou au mécanisme de coupe ;
- la came est implantée sur le levier appartenant à l'organe de manoeuvre, de manière qu'une certaine variation angulaire entre ledit levier et le vérin de manoeuvre lors de la mise en position de transport du mécanisme de coupe, amène ladite came à agir sur le verrou escamotable de manière à le faire pivoter autour de l'articulation liant ladite butée escamotable audit vérin de manoeuvre ;
- la came agit sur le verrou escamotable lorsque la valeur de l'angle entre le levier et le vérin de manoeuvre augmente ;
- le verrou de l'organe de manoeuvre peut être escamoté pour autoriser le pivotement du mécanisme de coupe vers le haut autour de l'axe longitudinal de la deuxième articulation en vue de la mise en position de transport permettant ainsi d'augmenter la valeur de l'angle entre le levier et le vérin de manoeuvre ce qui a pour effet d'escamoter le verrou escamotable pour assurer la fin de la phase de la mise en position de transport du mécanisme de coupe.

D'autres objets et caractéristiques ressortiront de la description ci-après avec référence aux dessins annexés qui représentent, à titres d'exemples non limitatifs, une forme de réalisation de la machine de coupe selon l'invention.

Sur ces dessins :
- la figure 1 représente, en position de travail, une machine de coupe selon l'invention vue de l'arrière et liée à un véhicule moteur ;
- la figure 2 représente la machine de coupe de la figure 1 vue de dessus ;
- la figure 3 représente, en position andain, la machine de coupe de la figure 1 vue de l'arrière ;
- la figure 4 représente, en position de transport, la machine de coupe de la figure 1 vue de l'arrière ;
- la figure 5 représente un agrandissement partiel de la machine de coupe de la figure 1 ;
- la figure 6 représente un agrandissement partiel de la machine de coupe de la figure 4 ;
- la figure 7 représente une coupe suivant le plan VII-VII défini sur la figure 6.

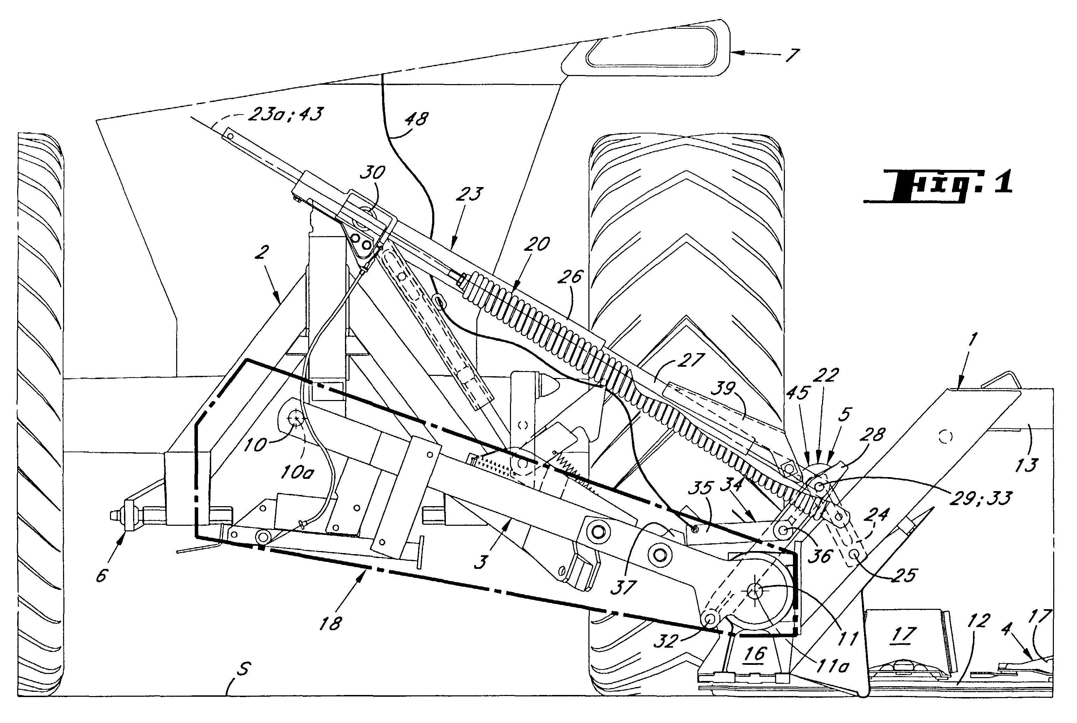

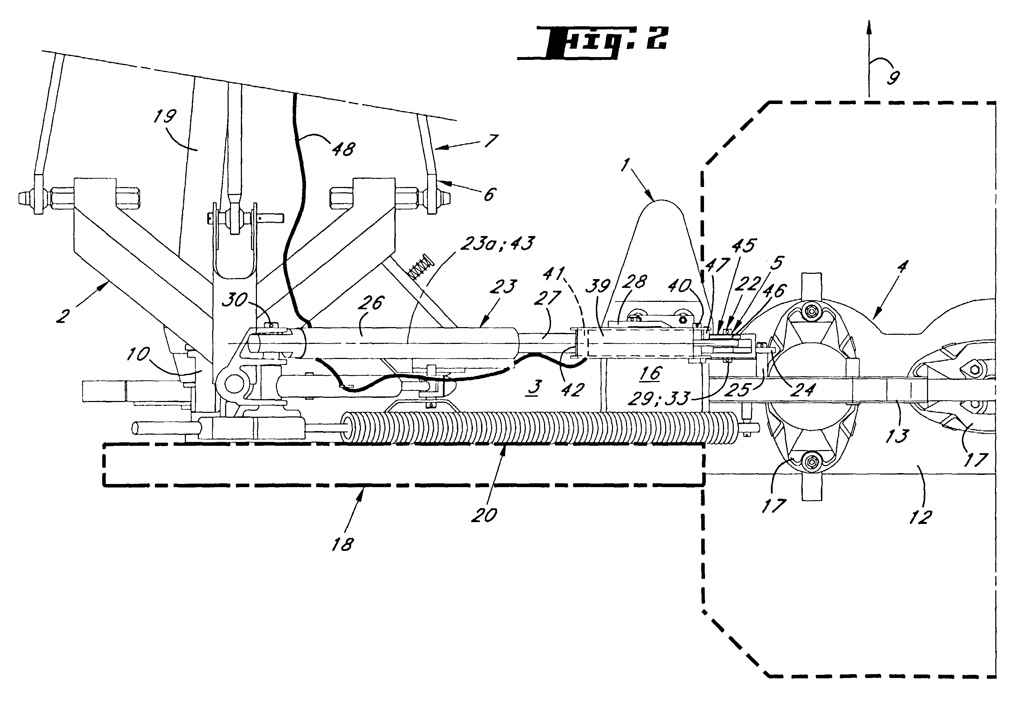

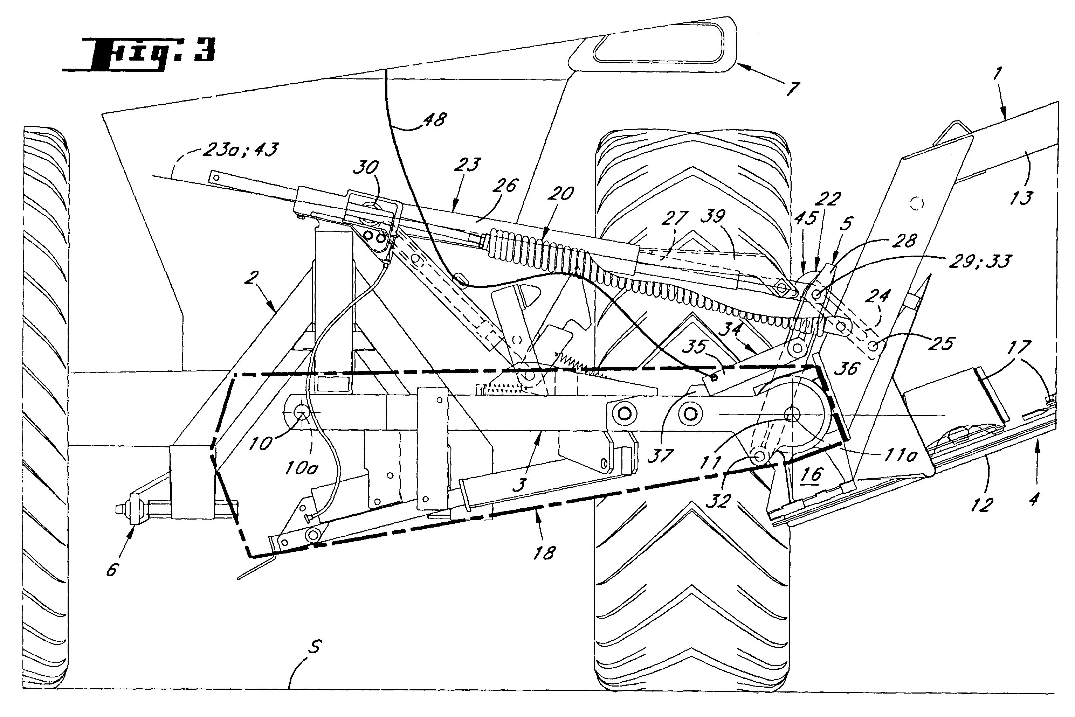

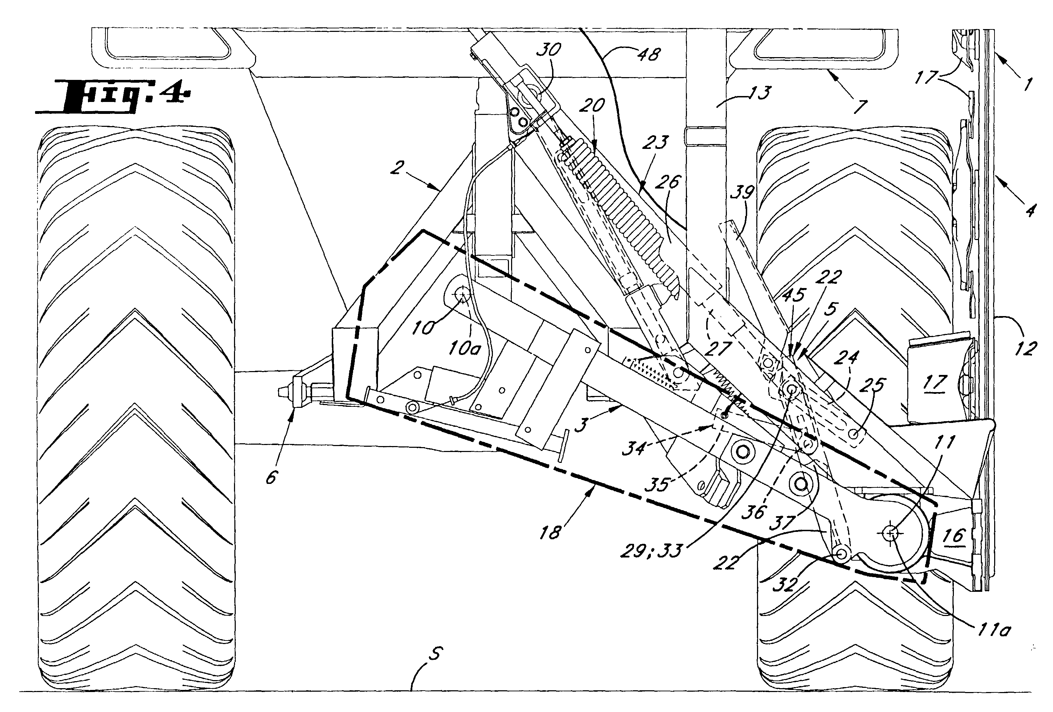

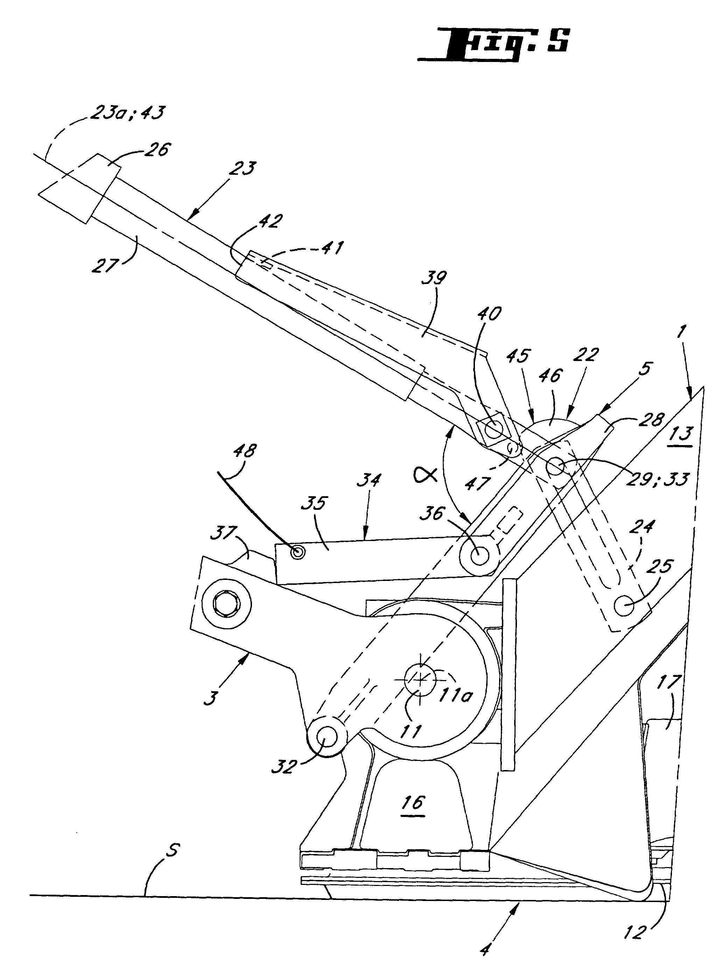

La machine de coupe (1) représentée sur les figures 1 à 6 comporte un certain nombre d'éléments semblables à ceux décrits par le document FR 96 05051. Pour de plus amples détails, on pourra se reporter, en cas de besoin, au texte dudit document.

La machine de coupe (1) se compose, dans les grandes lignes, d'une structure d'attelage (2), d'une poutre porteuse (3), d'un mécanisme de coupe (4) et d'un dispositif de manoeuvre (5).

La structure d'attelage (2) est liée à un dispositif d'attelage (6) d'un véhicule moteur (7). La poutre porteuse (3), quant à elle, s'étend, lors du travail, transversalement à la direction d'avance (9) et vers le bas en direction du mécanisme de coupe (4).

A l'une de ses extrémités longitudinales, la poutre porteuse (3) est liée à la structure d'attelage (2) au moyen d'une première articulation (10) d'axe longitudinal (10a) au moins sensiblement horizontal et dirigé suivant la direction d'avance (9). A l'autre extrémité longitudinale, la poutre porteuse (3) est liée au mécanisme de coupe (4) au moyen d'une deuxième articulation (11) d'axe longitudinal (11a) au moins sensiblement parallèle à l'axe longitudinal (10a) de la première articulation (10).

Le mécanisme de coupe (4) comporte, selon l'exemple représenté, dans les grandes lignes une barre de coupe (12) surmontée d'une structure porteuse (13) destinée notamment à supporter des organes de protection (représentés en traits interrompus sur la figure (2)). Cette structure porteuse (13) est fixée à la barre de coupe (12) au moyen d'un carter de renvoi (16). Ce carter de renvoi (16) lie d'une part le mécanisme de coupe (4) à la structure porteuse (3) et contient d'autre part une partie des organes d'entraînement destinés à entraîner des éléments de coupe (17) de la barre de coupe (12).

A l'arrière de la poutre porteuse (3) s'étend un dispositif de transmission (18) (représenté schématiquement en traits mixtes) lequel est destiné à être entraîné au moyen d'un arbre de transmission (19) à joints universels lié à la prise de puissance (non représentée) du véhicule moteur (7). Ce dispositif de transmission (18) est destiné à entraîner les organes d'entraînement du carter de renvoi (16).

Il est également prévu un dispositif d'allégement (20) connu par l'homme de l'art destiné à alléger le mécanisme de coupe (4) lors du travail.

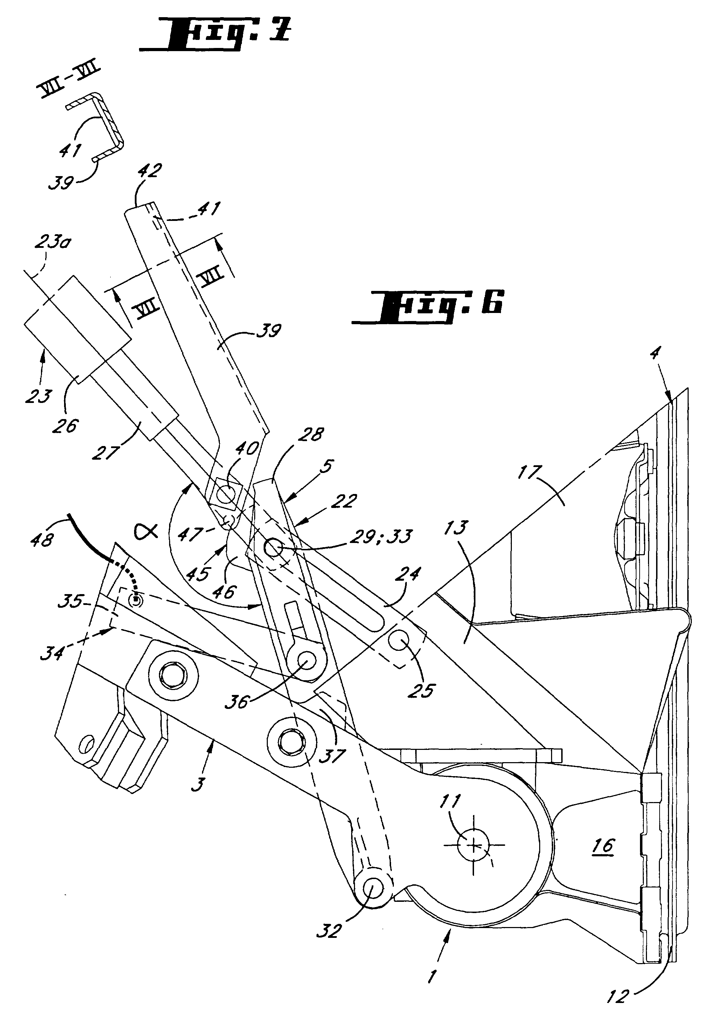

Le dispositif de manoeuvre (5) permet d'amener le mécanisme de coupe (4) en position de transport (figures 4 et 6), en position de travail (figures 1, 2 et 5) et en position andain (figure 3).

A cet effet, le dispositif de manoeuvre (5) comporte un organe de manoeuvre (22) et un vérin de manoeuvre (23). L'organe de manoeuvre (22) comporte un premier levier (24) lié d'une part à la structure porteuse (13) du mécanisme de coupe (4) au moyen d'une troisième articulation (25). Le vérin de manoeuvre (23) comporte un corps (26) et une tige (27). La tige (27) du vérin de manoeuvre (23) est liée à l'une des extrémités d'un deuxième levier (28) appartenant à l'organe de manoeuvre (22) au moyen d'une quatrième articulation (29) tandis que le corps (26) du vérin de manoeuvre (23) est lié à la structure d'attelage (2) au moyen d'une cinquième articulation (30).

On notera en sus que le deuxième levier (28) est lié à l'autre de ses extrémités à la poutre porteuse (3) au moyen d'une sixième articulation (32) et le premier levier (24) est lié au deuxième levier (28) au moyen d'une septième articulation (33) d'axe longitudinal au moins sensiblement confondu avec l'axe longitudinal de la quatrième articulation (29).

L'organe de manoeuvre (22) comporte également un verrou (34) constitué, selon l'exemple représenté, d'un troisième levier (35) lié au deuxième levier (28) au moyen d'une huitième articulation (36). Le troisième levier (35) est destiné à venir en appui sur une butée (37) prévue sur la poutre porteuse (3) de manière à stopper, dans une certaine position, le pivotement du mécanisme de coupe (4) vers le haut autour de l'axe longitudinal (11a) de la deuxième articulation (11), lors de la mise en position andain.

A la lumière des différentes figures, on voit en outre que le dispositif de manoeuvre (5) comporte une butée escamotable (39) qui est destinée à limiter le pivotement de la poutre porteuse (3) autour de l'axe longitudinal (10a) de la première articulation (10) lorsque le mécanisme de coupe (4) s'étend en position andain.

A cet effet, la butée escamotable (39) est liée à la tige (27) du vérin de manoeuvre (23) au moyen d'une neuvième articulation (40) qui est, d'une part au moins sensiblement parallèle à la quatrième et à la cinquième articulations (29, 30) liant respectivement ladite tige (27) à l'organe de manoeuvre (22) et le corps (26) du vérin de manoeuvre (23) à la structure d'attelage (2), et d'autre part située dans le proche voisinage de ladite quatrième articulation (29). En position de travail, la butée escamotable (39) repose sur la tige (27) du vérin de manoeuvre (23) par l'intermédiaire d'un organe de protection (41) en matière plastique souple fixé sur ladite butée escamotable (39), de manière à protéger ladite tige (27). Dans la position de travail, tout comme dans la position andain, la butée escamotable (39) s'étend dans la direction du corps (26) du vérin de manoeuvre (23) et épouse sensiblement la moitié supérieure de la tige (27). En position andain, la butée escamotable (39) bute en sus avec sa partie frontale (42) située à l'opposé de la neuvième articulation (40), sur le corps (26) du vérin de manoeuvre (23) de manière à limiter la course de ce dernier, c'est-à-dire la rentrée de la tige (27) dans ledit corps (26).

La butée escamotable (39) a, selon l'exemple représenté, une section en forme de "U" tel que représentée sur la figure 7, de manière que dans la position andain, la ligne d'action (43) de la butée escamotable (39) soit au moins sensiblement confondue avec l'axe longitudinal (23a) du vérin de manoeuvre (23) de manière à permettre audit vérin de manoeuvre (23) de travailler dans de bonnes conditions sans qu'il soit soumis à d'importantes contraintes de flexion.

On remarquera encore que la butée escamotable (39) est escamotée automatiquement, lors de la mise en position de transport, de manière à permettre à la tige (27) de rentrer davantage dans le corps (26) pour la mise en position de transport du mécanisme de coupe (4).

A cet effet est prévu un mécanisme de commande (45) qui agit automatiquement sur la butée escamotable (39) de manière à assurer la mise en place de ladite butée escamotable (39) lors de la mise en position de travail et l'escamotage de celle-ci lors de la mise en position de transport.

A cet effet, le mécanisme de commande (45) comporte une came (46) implantée sur le deuxième levier (28) de l'organe de manoeuvre (22) aux alentours de la quatrième et de la neuvième articulations (29, 40). Cette came (46) agit sur la butée escamotable (39) par l'intermédiaire d'un élément d'appui (47) appartenant à ladite butée escamotable (39) lorsque le mécanisme de coupe (4) est amené de la position de travail ou de la position andain dans la position de transport.

On notera que, la came (46) agit sur l'élément d'appui (47) de la butée escamotable (39) de manière à faire pivoter cette dernière vers le haut dans la position escamotée autour de la neuvième articulation (40) liant ladite butée escamotable (39) à la tige (27) du vérin de manoeuvre (23). A cet effet, l'élément d'appui (47) est situé entre la neuvième articulation (40) et la came (46) et, en position andain et en position de travail, dans le proche voisinage de ladite came (46).

Le dispositif de manoeuvre (5) de la machine de coupe (1) selon l'invention fonctionne de la façon suivante.

Lorsque le mécanisme de coupe (4) est en position de travail, il s'étend transversalement à la direction d'avance (9) et au niveau du sol (S). La butée escamotable (39) repose sur la tige (27) du vérin de manoeuvre (23) par l'intermédiaire de l'organe de protection (41) et la came (46) du mécanisme de commande (45) s'étend dans le proche voisinage de l'élément d'appui (47) de ladite butée escamotable (39). Le troisième levier (35) quant à lui s'étend dans le proche voisinage de la butée (37).

L'organe de manoeuvre (22) du dispositif de manoeuvre (5) fonctionne de manière similaire à celui décrit dans le document FR 96 05051. Pour de plus amples détails, on pourra se reporter, en cas de besoin, au texte dudit document.

Lorsque l'opérateur souhaite mettre la machine de coupe (1) de la position de travail dans la position andain, il commande à partir du véhicule moteur (7), le vérin de manoeuvre (23) de manière à faire rentrer la tige (27) dans le corps (26). A cet effet, le deuxième levier (28) de l'organe de manoeuvre (22) pivote autour de la sixième articulation (32), ce qui a pour effet de faire pivoter, à un moment donné, le mécanisme de coupe (4) quelque peu vers le haut autour de la deuxième articulation (11) jusqu'au moment où le verrou (34) vient en appui sur la butée (37). Dès cet instant, le mécanisme de coupe (4) et la poutre porteuse (3) pivotent autour de la première articulation (10) jusqu'à ce que la partie frontale (42) de la butée escamotable (39) vienne en appui sur le corps (26) du vérin de manoeuvre (23), ce qui a pour effet de stopper la rentrée de la tige (27) dans ledit corps (26) et de déterminer la position andain de la machine de coupe (1).

On notera que, lors de cette mise en position andain, la valeur de l'angle (α) entre le deuxième levier (28) et la tige (27) du vérin de manoeuvre (23) augmente quelque peu, ce qui a pour effet de rapprocher la came (46) dans le proche voisinage de l'élément d'appui (47).

Dans cette position andain (figure 3), la poutre porteuse (3) s'étend sensiblement horizontalement et le mécanisme de coupe (4) s'étend vers le haut à une certaine distance au-dessus du sol (S).

Pour remettre la machine de coupe (1) dans la position de travail, il suffit à l'opérateur de commander le vérin de manoeuvre (23) de manière qu'il puisse s'allonger, ce qui permet à la poutre porteuse (3) et au mécanisme de coupe (4) de revenir dans leur position de travail sous l'effet de leur propre poids.

Lorsque l'opérateur souhaite mettre la machine de coupe (1) de la position de travail dans la position de transport, il lève tout d'abord la structure d'attelage (2) au moyen du dispositif d'attelage (6) du véhicule moteur (7), ce qui a pour effet de soulever la partie du mécanisme de coupe (4) la plus proche de ladite structure d'attelage (2). Ensuite, l'opérateur pivote le verrou (34) vers le haut autour de la huitième articulation (36) au moyen d'une ficelle (48) de manière à ce que ledit verrou (34) esquive la butée (37) et soit neutralisé. Tout en maintenant l'action sur la ficelle (48), l'opérateur commande en sus le vérin de manoeuvre (23) lequel se raccourcit et fait pivoter le mécanisme de coupe (4) vers le haut autour de la deuxième articulation (11) au moyen de l'organe de manoeuvre (22) jusqu'à ce que ledit mécanisme de coupe (4) s'étende sensiblement verticalement dans la position de transport.

Dès que le mécanisme de coupe (4) est dans sa position de transport, l'opérateur cesse de commander le vérin de manoeuvre (23) et supprime l'action sur la ficelle (48).

On notera que, lors de la mise en position de transport, la valeur de l'angle (a) entre le deuxième levier (28) et la tige (27) du vérin de manoeuvre (23) augmente davantage, ce qui a pour effet de faire agir automatiquement la came (46) sur l'élément d'appui (47) de la butée escamotable (39) de manière à faire pivoter la butée escamotable (39) vers le haut dans la position escamotée autour de la neuvième articulation (40) pour que la partie frontale (42) de ladite butée escamotable (39) esquive le corps (26) du vérin de manoeuvre (23) et autorise à la tige (27) de rentrer davantage dans ledit corps du vérin de manoeuvre (23).

Pour mettre la machine de coupe (1) de la position de transport dans la position de travail, l'opérateur effectuera les différentes opérations en sens inverse, ce qui a notamment pour effet de diminuer la valeur de l'angle (α) entre le deuxième levier (28) et la tige (27) du vérin de manoeuvre (23) et qui fait que la came (46) cesse d'agir sur l'élément d'appui (47) de la butée escamotable (39) permettant à cette dernière de revenir dans sa position de travail sous l'effet de son propre poids dans laquelle elle repose sur la tige (27) du vérin de manoeuvre (23) par l'intermédiaire de l'organe de protection (41).

Finalement, différentes modifications restent possibles, notamment en ce qui concerne la constitution des divers éléments ou par substitution d'équivalents techniques, sans pour autant sortir du domaine de protection défini par les revendications.

Ainsi, il est parfaitement possible de prévoir un ressort de rappel fixé d'une part à la butée escamotable (39) et d'autre part à la tige (27) du vérin de manoeuvre (23) de manière à assister la mise en place de ladite butée escamotable (39) dans la position andain et de travail.

Il est encore parfaitement possible de prévoir une butée escamotable (39) de longueur réglable, de manière à pouvoir varier la position du mécanisme de coupe (4) en position andain.

## Revendications

1. Machine de coupe comportant
- un mécanisme de coupe (4) s'étendant :
• en position de travail, transversalement à la direction d'avance (9) et au niveau du sol (S) ;
• en position andain, transversalement à ladite direction d'avance (9) et à une certaine distance au-dessus du sol (S) ; et
• en position de transport, sensiblement verticalement vers le haut.
- une structure d'attelage (2) destinée à être liée au dispositif d'attelage (6) d'un véhicule moteur (7) ;
- une poutre porteuse (3) liée d'une part à la structure d'attelage (2) au moyen d'une première articulation (10) et d'autre part au mécanisme de coupe (4) au moyen d'une deuxième articulation (11) ;
- un dispositif de manoeuvre (5) permettant d'amener le mécanisme de coupe (4) dans les différentes positions et comportant
• un organe de manoeuvre (22) comprenant un verrou (34) destiné à stopper, lors de la mise en position andain, le pivotement du mécanisme de coupe (4), vers le haut, autour de l'axe longitudinal (1 la) de la deuxième articulation (11) ; et
• un vérin de manoeuvre (23) lié à l'une de ses extrémités audit organe de manoeuvre (22) et à l'autre de ses extrémités à la structure d'attelage (2) au moyen de deux articulations (29, 30) correspondantes,
***caractérisée en ce que*** le dispositif de manoeuvre (5) comporte en sus une butée escamotable (39) qui limite le pivotement de la poutre porteuse (3) autour de l'axe longitudinal (10a) de la première articulation (10) lorsque le mécanisme de coupe (4) s'étend en position andain et qui est escamotée pour permettre la mise en position de transport du mécanisme de coupe (4), la mise en place de ladite butée escamotable (39) et son escamotage se faisant automatiquement au moyen d'un mécanisme de commande (45) lorsque ledit mécanisme de coupe (4) est amené de la position de travail ou de la position andain dans la position de transport.

2. Machine de coupe selon la revendication 1, ***caractérisée en ce que*** la butée escamotable (39) limite la course du vérin de manoeuvre (23) lorsque le mécanisme de coupe (4) s'étend en position andain.

3. Machine de coupe selon la revendication 1 ou 2, ***caractérisée en ce que*** la butée escamotable (39) est liée au vérin de manoeuvre (23) au moyen d'une articulation (40) au moins sensiblement parallèle aux articulations (29, 30) liant respectivement le vérin de manoeuvre (23) à l'organe de manoeuvre (22) et à la structure d'attelage (2).

4. Machine de coupe selon la revendication 3, ***caractérisée en ce que*** la butée escamotable (39) est liée à la tige (27) du vérin de manoeuvre (23) au moyen de l'articulation (40).

5. Machine de coupe selon l'une quelconque des revendications 1 à 4, ***caractérisée en ce que*** la butée escamotable (39) est destinée à venir buter sur le corps (26) du vérin de manoeuvre (23) en position andain.

6. Machine de coupe selon la revendication 5, ***caractérisée en ce que,*** en position andain, lorsque la butée escamotable (39) est en butée sur le corps (26) du vérin de manoeuvre (23), la ligne d'action (43) de la butée escamotable (39) est au moins sensiblement confondue avec l'axe longitudinal (23a) dudit vérin de manoeuvre (23).

7. Machine de coupe selon l'une quelconque des revendications 1 à 6, ***caractérisée en ce que,*** en position de travail et en position andain, la butée escamotable (39) repose sur la tige (27) du vérin de manoeuvre (23) par l'intermédiaire d'un organe de protection (41) destiné à protéger ladite tige (27).

8. Machine de coupe selon la revendication 7, ***caractérisée en ce que*** l'organe de protection (41) est en matière plastique souple et est fixé sur la butée escamotable (39).

9. Machine de coupe selon l'une quelconque des revendications 1 à 8, ***caractérisée en ce que*** le mécanisme de commande (45) qui assure la mise en place et l'escamotage de la butée escamotable (39) comporte une came (46) qui agit sur ladite butée escamotable (39) lorsque le mécanisme de coupe (4) est amené de la position de travail ou de la position andain dans la position de transport.

10. Machine de coupe selon les revendications 3 à 6 et la revendication 9, ***caractérisée en ce que*** la came (46) agit sur la butée escamotable (39) de manière à la faire pivoter autour de l'articulation (40) liant ladite butée escamotable (39) au vérin de manoeuvre (23).

11. Machine de coupe selon la revendication 9 ou 10, ***caractérisée en ce que*** la came (46) fait partie d'un levier (28 ; 24) appartenant à l'organe de manoeuvre (22), ledit levier (28 ; 24) étant articulé à l'une de ses extrémités à l'extrémité du vérin de manoeuvre (23) et à l'autre extrémité à la poutre porteuse (3) ou au mécanisme de coupe (4).

12. Machine de coupe selon les revendications 3 à 6 et la revendication 11, ***caractérisée en ce que*** la came (46) est implantée sur le levier (28 ; 24) appartenant à l'organe de manoeuvre (22), de manière qu'une certaine variation angulaire entre ledit levier (28 ; 24) et le vérin de manoeuvre (23) lors de la mise en position de transport du mécanisme de coupe (4), amène ladite came (46) à agir sur la butée escamotable (39) de manière à la faire pivoter autour de l'articulation (40) liant ladite butée escamotable (39) audit vérin de manoeuvre (23).

13. Machine de coupe selon la revendication 12, ***caractérisée en ce que*** la came (46) agit sur la butée escamotable (39) lorsque la valeur de l'angle (α) entre le levier (28 ; 24) et le vérin de manoeuvre (23) augmente.

14. Machine de coupe selon la revendication 13, ***caractérisée en ce que*** le verrou (34) de l'organe de manoeuvre (22) peut être escamoté pour autoriser le pivotement du mécanisme de coupe (4), vers le haut, autour de l'axe longitudinal (11a) de la deuxième articulation (11) en vue de la mise en position de transport permettant ainsi d'augmenter la valeur de l'angle (α) entre le levier (28 ; 24) et le vérin de manoeuvre (23) ce qui a pour effet d'escamoter la butée escamotable (39) pour assurer la fin de la phase de mise en position de transport du mécanisme de coupe (4).

## Claims

1. Cutting machine comprising:
- a cutting mechanism (4) extending:
• in the work position, transversely to the direction of travel (9) and level with the ground (S);
• in the windrowing position, transversely to the said direction of travel (9) and at a certain distance above the ground (S); and
• in the transport position, substantially vertically upwards
- a hitching structure (2) intended to be connected to the hitching device (6) of a motor vehicle (7);
- a carrying beam (3) connected on the one hand to the hitching structure (2) by means of a first articulation (10) and on the other hand to the cutting mechanism (4) by means of a second articulation (11);
- an operating device (5) allowing the cutting mechanism (4) to be brought into the various positions and comprising:
• an operating element (22) comprising a latch (34) intended to stop the upwards pivoting of the cutting mechanism (4) about the longitudinal axis (11a) of the second articulation (11) during movement into the windrowing position; and
• an operating ram (23) connected at one of its ends to the said operating element (22) and at the other of its ends to the hitching structure (2) by means of two corresponding articulations (29, 30),
***characterized in* that** the operating device (5) additionally comprises a retractable stop (39) which limits the pivoting of the carrying beam (3) about the longitudinal axis (10a) of the first articulation (10) when the cutting mechanism (4) is extending in the windrowing position and which is retracted to allow the cutting mechanism (4) to be placed in the transport position, the said retractable stop (39) being set in place and retracted automatically by means of a control mechanism (45) when the said cutting mechanism (4) is brought from the work position or from the windrowing position into the transport position.

2. Cutting machine according to Claim 1, ***characterized in* that** the retractable stop (39) limits the travel of the operating ram (23) when the cutting mechanism (4) is extending in the windrowing position.

3. Cutting machine according to Claim 1 or 2, ***characterized in* that** the retractable stop (39) is connected to the operating ram (23) by means of an articulation (40) that is at least substantially parallel to the articulations (29, 30) that respectively connect the operating ram (23) to the operating element (22) and to the hitching structure (2).

4. Cutting machine according to Claim 3, ***characterized in* that** the retractable stop (39) is connected to the rod (27) of the operating ram (23) by means of the articulation (40).

5. Cutting machine according to any one of Claims 1 to 4, ***characterized in* that** the retractable stop (39) is intended to rest against the body (26) of the operating ram (23) in the windrowing position.

6. Cutting machine according to Claim 5, ***characterized in* that** in the windrowing position, when the retractable stop (39) is resting against the body (26) of the operating ram (23), the line of action (43) of the retractable stop (39) is at least substantially coincident with the longitudinal axis (23a) of the said operating ram (23).

7. Cutting machine according to any one of Claims 1 to 6, ***characterized in* that** in the work position and in the windrowing position, the retractable stop (39) rests on the rod (27) of the operating ram (23) via a protective element (41) intended to protect the said rod (27).

8. Cutting machine according to Claim 7, ***characterized in* that** the protective element (41) is made of flexible plastic and is fixed to the retractable stop (39).

9. Cutting machine according to any one of Claims 1 to 8, ***characterized in* that** the control mechanism (45) that allows the retractable stop (39) to be set in place and to be retracted comprises a cam (46) which acts on the said retractable stop (39) when the cutting mechanism (4) is brought from the work position or from the windrowing position into the transport position.

10. Cutting machine according to Claims 3 to 6 and Claim 9, ***characterized in* that** the cam (46) acts on the retractable stop (39) so as to make it pivot about the articulation (40) that connects the said retractable stop (39) to the operating ram (23).

11. Cutting machine according to Claim 9 or 10, ***characterized in* that** the cam (46) forms part of a lever (28; 24) belonging to the operating element (22), the said lever (28; 24) being articulated at one of its ends to the end of the operating ram (23) and at the other end to the carrying beam (3) or to the cutting mechanism (4).

12. Cutting machine according to Claims 3 to 6 and Claim 11, ***characterized in* that** the cam (46) is fitted to the lever (28; 24) belonging to the operating element (22) in such a way that a certain angular variation between the said lever (28; 24) and the operating ram (23) as the cutting mechanism (4) is being placed in the transport position, makes the said cam (46) act on the retractable stop (39) in such a way as to make it pivot about the articulation (40) that connects the said retractable stop (39) to the said operating ram (23).

13. Cutting machine according to Claim 12, ***characterized in* that** the cam (46) acts on the retractable stop (39) when the value of the angle (α) between the lever (28; 24) and the operating ram (23) increases.

14. Cutting machine according to Claim 13, ***characterized in* that** the latch (34) of the operating element (22) can be retracted to allow the cutting mechanism (4) to pivot upwards about the longitudinal axis (11a) of the second articulation (11) with a view to placing it in the transport position, thus making it possible to increase the value of the angle (α) between the lever (28; 24) and the operating ram (23), this having the effect of retracting the retractable stop (39) to bring to an end the phase of placing the cutting mechanism (4) in the transport position.

## Patentansprüche

1. Mähmaschine, die
- einen Schneidmechanismus (4), der sich
• in Arbeitsstellung quer zur Fahrtrichtung (9) und in Höhe des Bodens (S) erstreckt;
• in Schwadstellung quer zur Fahrtrichtung (9) und in einem bestimmten Abstand über dem Boden (S) erstreckt; und
• in Transportstellung im wesentlichen vertikal nach oben erstreckt,
- eine Kupplungskonstruktion (2) zur Verbindung mit der Kupplungsvorrichtung (6) eines Motorfahrzeugs (7);
- einen Stützträger (3), der einerseits mittels eines ersten Gelenks (10) mit der Kupplungskonstruktion (2) und andererseits mittels eines zweiten Gelenks (11) mit dem Schneidmechanismus (4) verbunden ist;
- eine Betätigungsvorrichtung (5), die es gestattet, den Schneidmechanismus (4) in die verschiedene Stellungen zu bringen und aus
• einem Betätigungselement (22), das einen Riegel (34) aufweist, der bei der Anordnung in Schwadstellung das Nachobenschwenken des Schneidmechanismus (4) um die Längsachse (11a) des zweiten Gelenks (11) anhalten soll; und
• einem Betätigungszylinder (23), der mittels zweier entsprechender Gelenke (29, 30) mit einem seiner Enden mit dem Betätigungselement (22) und mit dem anderen seiner Enden mit der Kupplungskonstruktion (2) verbunden ist, besteht,
umfaßt,
***dadurch gekennzeichnet*, daß** die Betätigungsvorrichtung (5) des weiteren einen klappbaren Anschlag (39) aufweist, der das Schwenken des Stützträgers (3) um die Längsachse (10a) des ersten Gelenks (10) begrenzt, wenn sich der Schneidmechanismus (4) in Schwadstellung erstreckt, und der zurückgeklappt wird, um die Anordnung des Schneidmechanismus (4) in Transportstellung zu gestatten, wobei die Positionierung des klappbaren Anschlags (39) und sein Zurückklappen mittels eines Steuermechanismus (45) automatisch erfolgen, wenn der Schneidmechanismus (4) aus der Arbeitsstellung oder der Schwadstellung in die Transportstellung gebracht wird.

2. Mähmaschine nach Anspruch 1, ***dadurch gekennzeichnet,* daß** der klappbare Anschlag (39) den Hub des Betätigungszylinders (23) begrenzt, wenn sich der Schneidmechanismus (4) in Schwadstellung erstreckt.

3. Mähmaschine nach Anspruch 1 oder 2, ***dadurch gekennzeichnet,* daß** der klappbare Anschlag (39) mittels eines Gelenks (40), das sich zumindest im wesentlichen parallel zu den Gelenken (29, 30), die den Betätigungszylinder (23) mit dem Betätigungselement (22) bzw. der Kupplungskonstruktion (2) verbinden, erstreckt, mit dem Betätigungszylinder (23) verbunden ist.

4. Mähmaschine nach Anspruch 3, ***dadurch gekennzeichnet,* daß** der klappbare Anschlag (39) mittels des Gelenks (40) mit der Stange (27) des Betätigungszylinders (23) verbunden ist.

5. Mähmaschine nach irgend einem der Ansprüche 1 bis 4, ***dadurch gekennzeichnet*, daß** der klappbare Anschlag (39) in Schwadstellung an den Körper (26) des Betätigungszylinders (23) anstoßen soll.

6. Mähmaschine nach Anspruch 5, ***dadurch gekennzeichnet,* daß** die Wirkungslinie (43) des klappbaren Anschlags (39) in Schwadstellung, wenn der klappbare Anschlag (39) an den Körper (26) des Betätigungszylinders (23) anstößt, zumindest im wesentlichen mit der Längsachse (23a) des Betätigungszylinders (23) zusammenfällt.

7. Mähmaschine nach irgend einem der Ansprüche 1 bis 6, ***dadurch gekennzeichnet,* daß** der klappbare Anschlag (39) in Arbeitsstellung und in Schwadstellung über ein zum Schutz der Stange (27) des Betätigungszylinders (23) bestimmtes Schutzelement (41) an der Stange (27) anliegt.

8. Mähmaschine nach Anspruch 7, ***dadurch gekennzeichnet,* daß** das Schutzelement (41) aus weichem Kunststoff besteht und am klappbaren Anschlag (39) befestigt ist.

9. Mähmaschine nach irgend einem der Ansprüche 1 bis 8, ***dadurch gekennzeichnet*, daß** der Steuermechanismus (45), der das Positionieren und Zurückklappen des klappbaren Anschlags (39) gewährleistet, eine Kurve (46) aufweist, die auf den klappbaren Anschlag (39) einwirkt, wenn der Schneidmechanismus (4) aus der Arbeitsstellung oder der Schwadstellung in die Transportstellung gebracht wird.

10. Mähmaschine nach den Ansprüchen 3 bis 6 und nach Anspruch 9, ***dadurch gekennzeichnet*, daß** die Kurve (46) dahingehend auf den klappbaren Anschlag (39) einwirkt, daß dieser um das den klappbaren Anschlag (39) mit dem Betätigungszylinder (23) verbindende Gelenk (40) geschwenkt wird.

11. Mähmaschine nach Anspruch 9 oder 10, ***dadurch gekennzeichnet*, daß** die Kurve (46) Teil eines Hebels (28; 24) ist, der zum Betätigungselement (22) gehört, wobei der Hebel (28; 24) mit einem seiner Enden an das Ende des Betätigungszylinders (23) und mit dem anderen Ende an den Stützträger (3) oder den Schneidmechanismus (4) angelenkt ist.

12. Mähmaschine nach den Ansprüchen 3 bis 6 und Anspruch 11, ***dadurch gekennzeichnet*, daß** die Kurve (46) so an dem zum Betätigungselement (22) gehörenden Hebel (28; 24) angebracht ist, daß eine bestimmte Winkeländerung zwischen dem Hebel (28; 24) und dem Betätigungszylinder (23) bei der Anordnung des Schneidmechanismus (4) in Transportstellung dazu führt, daß die Kurve (46) so auf den klappbaren Anschlag (39) einwirkt, daß dieser um das den klappbaren Anschlag (39) mit dem Betätigungszylinder (23) verbindende Gelenk (40) schwenkt.

13. Mähmaschine nach Anspruch 12, ***dadurch gekennzeichnet*, daß** die Kurve (46) auf den klappbaren Anschlag (39) einwirkt, wenn der Wert des Winkels (α) zwischen dem Hebel (28; 24) und dem Betätigungszylinder (23) zunimmt.

14. Mähmaschine nach Anspruch 13, ***dadurch gekennzeichnet*, daß** der Riegel (34) des Betätigungselements (22) zurückgeklappt werden kann, um das Nachobenschwenken des Schneidmechanismus (4) um die Längsachse (11a) des zweiten Gelenks (11) zur Anordnung in Transportstellung zu gestatten, wodurch der Wert des Winkels (α) zwischen dem Hebel (28; 24) und dem Betätigungszylinder (23) zunehmen kann, was zu einem Zurückklappen des klappbaren Anschlags (39) führt, um das Ende der Phase der Anordnung des Schneidmechanismus (4) in Transportstellung zu gewährleisten.
